# EUROPÄISCHE PATENTSCHRIFT

(11) **EP 2 628 960 B1**
(45) Veröffentlichungstag und Bekanntmachung des Hinweises auf die Patenterteilung: **15.01.2014**
(21) Anmeldenummer: 12156195.5
(22) Anmeldetag: 20.02.2012
(51) Int. Cl.: F15B 15/22

(54) **Hydraulik-Rückschlagventil**
Hydraulic non-return valve
Clapet anti-retour hydraulique

(43) Veröffentlichungstag der Anmeldung: 21.08.2013
(73) Patentinhaber: HAWE Hydraulik SE, 81673 München (DE)
(72) Erfinder: Neumair, Georg, 85402 Thalhausen (DE); Hundschell, Hilarius, 84424 Isen (DE); Schraml, Sabine, 83670 Bad Heilbrunn (DE)
(74) Vertreter: Grünecker, Kinkeldey, Stockmair & Schwanhäusser

(56) Entgegenhaltungen:
- DE-A1- 1 750 939
- DE-A1- 3 417 447
- GB-A- 2 162 248
- US-A- 4 337 687

## Beschreibung

Die Erfindung betrifft ein Hydraulik-Rückschlagventil der im Oberbegriff des Patentanspruchs 1 angegebenen Art.

Ein derartiges Hydraulik-Rückschlagventil ist in Form eines Einschraubventils beispielsweise bekannt aus DE 42 38 094 C. Das Schließglied ist aus einer Wälzlager-Vollkugel durch spanende Bearbeitung einstückig hergestellt, hat eine Pilzform mit einer Kugelkalotte als Dichtfläche, einen die Dichtfläche begrenzenden zylindrischen Führungsabschnitt und den von einer ebenen Fläche an der Unterseite des Pilzkopfes vorstehenden Führungsschaft. In dem Gehäuse ist im Sperrseite-Kanal ein Einsatz angeordnet, der Axialführungen für den Führungsabschnitt und den Führungsschaft aufweist und ein Widerlager für eine Ventilschließfeder bildet, die beispielsweise als kegelige Schraubendruckfeder ausgebildet ist.

In einem aus GB 2 162 248 A bekannten Linearaktuator ist ein Hydraulik-Rückschlagventil in einem eingeschraubten Rohrkörper untergebracht, der eine Kolbenstange eines Kolbens führt. Der mit dem Führungsschaft koaxiale Vorsprung steht über eine Stirnfläche des Rohrkörpers vor, derart, dass das Hydraulik-Rückschlagventil mechanisch entsperrt wird, wenn der Kolben zur Rohrkörper-Stirnfläche fährt. Das Hydraulik-Rückschlagventil ist mit einem tellerförmigen Schließglied versehen, dem eine Ringdichtung zugeordnet ist. Das Hydraulik-Rückschlagventil baut in Längsrichtung lang.

Aus DE 1 750 939 A ist eine Vorrichtung zum Dämpfen der Bewegung eines Kolbens in einem Zylinder bekannt, wobei in einem Kolbenboden ein Senkbremsventil untergebracht ist, das als variable Drossel wirkt, wenn der Kolben einen Betätigungsvorsprung des Senkbremsventils verstellt.

Aus US 4 337 687 A ist ein in einen Kolben eingebautes, doppelt wirkendes Rückschlagventil mit einem spindelförmigen Schließglied bekannt, dessen Vorsprung über die Stirnseite des Kolbens vorsteht und bei Annäherung des Kolbens an einen Endanschlag aufgesteuert wird. Das Rückschlagventil baut in Axialrichtung unzweckmäßig lang.

Aus DE 34 17 447 A ist eine Vorrichtung zur Erfassung der Endlagen eines Hydraulikzylinders bekannt, bei der in dem Kolben zwei gegensinnige Druckbegrenzungsventil-Anordnungen vorgesehen sind, die bei Annäherung des Kolbens an die jeweilige Zylinderendwand abgreifbare Druckimpulse erzeugen. Jedes Druckbegrenzungsventil besteht aus einem federbelasteten Kugel-Rückschlagventil und einem Tellerventil mit einem Vorsprung, der das Tellerventil mechanisch aufsteuert.

Ähnliche Rückschlagventile sind bekannt aus DE 31 12 932 C und DE 32 09 522 C. Hydraulisch entsperrbare Rückschlagventile sind ebenfalls bekannt, benötigen jedoch hierfür einen gesteuerten Druckimpuls.

Der Erfindung liegt die Aufgabe zugrunde, ein Hydraulik-Rückschlagventil dieser Art anzugeben, das kompakt, einfach und kostengünstig herstellbar ist und sich auf einfache Weise mechanisch entsperren lässt. Ein weiterer Teil der Aufgabe besteht darin, für Hydraulikzylinder einer Verstellvorrichtung eines Solargenerators ein einfaches und funktionssicheres Hydraulik-Rückschlagventil zu schaffen, das es ermöglicht, den Kolben jedes Hydraulikzylinders im Bereich einer Endlage freizuschalten, d.h., zwischen beiden Beaufschlagungsseiten des Kolbens einen Druckausgleich herzustellen.

Die gestellte Aufgabe wird mit den Merkmalen des Patentanspruches 1 gelöst.

Der durch den Ventilsitz und zumindest zum dort angrenzenden Ende des Gehäuses vorstehende, einstückig am Schließglied vorgesehene Vorsprung beeinflusst die rein druckabhängige Rückschlagfunktion nicht, ermöglicht jedoch eine besonders einfache mechanische Entsperrung durch Aufbringen einer Kraft auf den Vorsprung, die das Schließglied vom Ventilsitz abhebt und in abgehobener Lage hält. Dabei ist das Hydraulik-Rückschlagventil besonders einfach mechanisch bereits dadurch entsperrbar, dass es insgesamt relativ zu einem Anschlag bewegt wird, der an dem Ende des Vorsprungs angreift. Dieser Anschlag könnte auch ein durch einen Kolben oder Magneten betätigter Stößel sein. Als Dichtfläche wird eine kugelige oder konische Ringfläche verwendet. Der Ventilsitz kann an einem Bohrungsrand eine kreisförmige 90°-Kante oder eine kugelige oder konische Fase aufweisen. Dabei sind die Axialführungen von Axialbohrungsteilen begrenzte Axialstege für den Führungsabschnitt und eine Axialbohrung für den Führungsschaft, jeweils des Schließgliedes, und in einem topfartigen Einsatz ausgebildet, der mit seinem Topfrand voran in einen Passabschnitt des Gehäuses zumindest eingepresst ist. Diese baulich einfach verwirklichten Axialführungen verhindern, dass bei abgehobenem Schließglied ein Ventilschnarren auftritt oder Vibrationen des Schließgliedes auftreten, die Schäden hervorrufen können. Der Einsatz erfüllt eine Doppelfunktion, da die Topfwand des Einsatzes und eine eine Schneidkante begrenzende Ansenkung des Gehäuses gemeinsam eine Aufnahmenut für einen O-Ring bilden. In diesem Bereich wird das eingebaute Rückschlagventil, z.B. im Falle eines Einschraub-Rückschlagventils, gegenüber dem nicht absolut dichten Gewindebereich abgedichtet, und zwar durch die Wirkung der Schneidkante und des komprimierten O-Rings. Somit wird ein in Längsrichtung außerordentlich kompaktes, funktionssicheres und kostengünstig herstellbares Rückschlagventil geschaffen.

Besonders zweckmäßig steht der Vorsprung in Sperrstellung des Rückschlagventils mit am Ventilsitz anliegendem Schließglied mit einem vorbestimmten Überstand über das Gehäuseende vor, so dass bei Annäherung des Gehäuseendes an einen Anschlag das Rückschlagventil automatisch mechanisch entsperrt wird, und bei Entfernen des Gehäuses von diesem Anschlag wieder selbsttätig die Sperrstellung einnimmt.

Um bei hohen Entsperrkräften Schäden im Rückschlagventil zu vermeiden, ist es wichtig, dass der Überstand des Vorsprungs in Axialrichtung des Rückschlagventils kleiner ist als der maximale Abhebehub des Schließgliedes vom Ventilsitz, welcher maximale Abhebehub beispielsweise durch die Axialführungen definiert wird.

Bei einer zweckmäßigen und einfachen Ausführungsform ist der Vorsprung ein zylindrischer Zapfen, beispielsweise mit großer, ebener Endfläche und größerer Länge und größerem Außendurchmesser als der Führungsschaft des Schließgliedes. Die Länge definiert den Überstand über das Gehäuseende. Der Außendurchmesser wird so gewählt, dass der im Ventilsitz begrenzte Ringraum noch den gewünschten maximalen Durchströmquerschnitt freihält. Die Endfläche stabilisiert das Schließglied beim Entsperren.

Um bei abgehobenem Schließglied günstige Strömungsverhältnisse gewährleisten zu können, ist es zweckmäßig, wenn der Vorsprung mit einer Hohlkehle an einer die Dichtfläche begrenzenden ebenen Fläche des Schließgliedes beginnt.

Besonders zweckmäßig ist das Hydraulik-Rückschlagventil in einem Durchgangskanal eines Kolbens eines Hydraulikzylinders derart verbaut, dass der Vorsprung mit seinem Überstand über das Gehäuseende auf eine im Hydraulikzylinder vorgesehene Anschlagfläche für den Kolben ausgerichtet und mit Anlage des Kolbens an der Anschlagfläche zwecks mechanischer Entsperrung des Rückschlagventils von der Anschlagfläche betätigbar ist. Allein durch die Annäherung des Kolbens bei dessen Bewegung zur Endlage wird das Hydraulikventil mechanisch entsperrt, um über den Durchgangskanal beide Kolbenseiten druckausgleichend zu verbinden, und so beispielsweise einen doppelseitig beaufschlagbaren Hydraulikzylinder, z.B. vorübergehend, freizuschalten. Der Hydraulikzylinder ist zusammen mit einem parallelen Hydraulikzylinder einer Verstellvorrichtung eines Solargenerators verschaltet, in der beide Hydraulikzylinder stationär abgestützt und bezüglich einer Verstellachse in Verstellrichtung zueinander versetzt an einem schwenkbar gelagerten Träger des Solargenerators derart angelenkt sind, dass bei Verstellbewegungen die Kolben der beiden Hydraulikzylinder ihre jeweilige Endlage an oder nahe einer Anschlagfläche des Hydraulikzylinders mit einer gegenseitigen Phasenversetzung durchlaufen, wobei in jedem Kolben zumindest ein mechanisch entsperrbares Rückschlagventil verbaut ist, das in der Endlage mechanisch über den Überstand des Vorsprungs entsperrbar ist und dann beide Kolbenseiten druckausgleichend verbindet. Durch die mechanisch entsperrbaren Rückschlagventile wird auf besonders einfache Weise vermieden, dass ein Hydraulikzylinder in Endlage seines Kolbens noch Kräfte ausübt, die den anderen Hydraulikzylinder bei dessen Verstellbewegung behindern und/oder die Schwenklagerung des Trägers des Solargenerators unzweckmäßig belasten, weil dann der freizuschaltende Hydraulikzylinder einen extrem ungünstigen oder keinen Hebelarm in Bezug auf die Verstellachse hat.

Ferner ist zweckmäßig, im Durchgangskanal ein weiteres Rückschlagventil mit zur Sperrrichtung des einen mechanisch entsperrbaren Rückschlagventils entgegengesetzter Sperrrichtung angeordnet. Dieses weitere Rückschlagventil ermöglicht es einerseits, den freigeschalteten Hydraulikzylinder auch durch Druckbeaufschlagung in der entgegengesetzten Verstellrichtung aus der Endlage zu bringen, und andererseits im Normalbetrieb, d.h. außerhalb der

Endlage, den Kolben in jeder Beaufschlagungsrichtung hydraulisch beaufschlagen zu können, weil der Durchgangskanal blockiert ist. Von der Erfindung soll ferner mitumfasst sein, in dem Kolben des Hydraulikzylinders, falls dieser in zwei entgegengesetzte Endlagen jeweils an eine Anschlagfläche verfahrbar sein sollte, in Durchgangskanälen des Kolbens zumindest zwei solcher mechanisch entsperrbarer Rückschlagventile mit entgegengesetzten Entsperrrichtungen zu verbauen.

Ausführungsformen des Erfindungsgegenstandes werden anhand der Zeichnungen erläutert. Es zeigen:
- Fig. 1: einen Axialschnitt eines Hydraulik-Rückschlagventils in Sperrstellung,
- Fig. 2: eine Draufsicht zu Fig. 1,
- Fig. 3: einen Radialschnitt in der Schnittebene III - III in Fig. 1,
- Fig. 4: eine Einbausituation des Hydraulik-Rückschlagventils,
- Fig. 5: eine weitere Einbausituation, und
- Fig. 6: eine Schemadarstellung einer Verstellvorrichtung eines Solargenerators mit zwei Hydraulikzylindern, von denen zumindest einer mit einem Hydraulik-Rückschlagventil, beispielsweise entsprechend der Fig. 1 bis 4 ausgestattet ist.

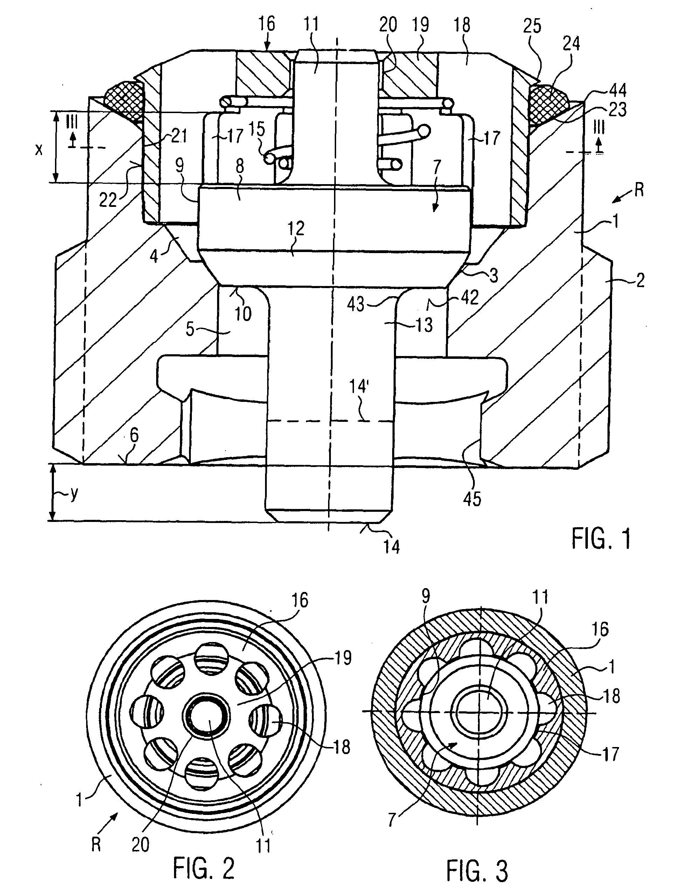

Ein in den Fig. 1, 2 und 3 in einem Axialschnitt, einer Draufsicht und einem Radialschnitt in der Schnittebene III - III in Fig. 1 gezeigtes, mechanisch entsperrbares Hydraulik-Rückschlagventil R weist ein annähernd rohrförmiges Gehäuse 1 auf, das im Falle eines Einschraub-Rückschlagventils mit einem Außengewinde 2 versehen sein kann. Das Außengewinde 2 entspricht beispielsweise einem 1/4-Zollgewinde, wobei das Rückschlagventil R dann eine axiale Bauhöhe von etwas weniger als 10 mm haben kann, d.h. die axiale Länge des Rückschlagventils R abhängig vom jeweils gewählten Gewindedurchmesser etwa um 20 % kleiner ist als der Gewindedurchmesser (möglichst kompakte Einbaulänge).

In dem Gehäuse 1 trennt ein innenliegender Ventilsitz 3 einen Sperrseite-Kanal 4 von einem Strömungsseite-Kanal 5, in welchem angrenzend an ein Gehäuseende 6 ein Innensechskant 45 eingeformt sein kann.

Dem Ventilsitz 3 ist ein Schließglied 7 zugeordnet, das einen scheibenförmigen Grundkörper 8 mit einer ebenen unteren Fläche 10 und eine hier kugelige Dichtfläche 12 in Form einer Ringfläche aufweist, an welche ein zylindrischer Axialführungsabschnitt 9 mit einem Außendurchmesser größer als der Durchmesser des Ventilsitzes angrenzt, der sich in den Sperrseite-Kanal 4 erstreckt. Im Sperrseite-Kanal 4 ist ferner einstückig zentral ein zur Axialführung 9 koaxialer Führungsschaft 11 am Schließglied 7 geformt. Das Gehäuse 1 und das einstückige Schließglied 7 bestehen zweckmäßig aus Stahl, z.B. hochwertigem Wälzlagerstahl oder Werkzeugstahl, und sind zumindest bereichsweise geschliffen und gehärtet.

An der ebenen Fläche 10 des Schließgliedes 7 beginnt dem Führungsschaft 11 abgewandt einstückig ein Vorsprung 13 mit vorzugsweise einer die Strömungsverhältnisse begünstigenden Hohlkehle 43, der als zylindrischer Stift ausgebildet ist, und, vorzugsweise, mit seinem Ende 14 in der gezeigten Sperrstellung des Rückschlagventils R mit einem Überstand Y über das Gehäuseende 6 vorsteht. Alternativ steht das Ende 14' selbst in der Sperrstellung nicht vor.

In jedem Fall ist der Vorsprung 13, der zur mechanischen Entsperrung des Rückschlagventils dient, so ausgelegt, dass er selbst in Entsperrstellung des Rückschlagventils (Schließglied 7 mit der Dichtfläche 12 über einen maximalen Öffnungshub X vom Ventilsitz 3 abgehoben) durch den Ventilsitz 3 und in den Strömungsseite-Kanal 5 ragt und im Ventilsitz 3 einen Ringraum 42 begrenzt.

Der Überstand Y (in der Sperrstellung) ist in jedem Fall axial kürzer als der maximale Abhebehub X des Schließgliedes 7. Bei einem 1/4-Zoll-Rückschlagventil R beträgt der maximale Abhebehub X beispielsweise 1,7 mm, der Überstand Y hingegen nur 1,4 mm. Der Vorsprung 13 ist z.B. länger und hat einen größeren Außendurchmesser als der Führungsschaft 11.

Das Schließglied 7 wird durch eine Ventilschließfeder 15 in Schließrichtung zum Ventilsitz 3 beaufschlagt. Die Ventilschließfeder 15 ist beispielsweise eine konische Schraubendruckfeder, die beim maximalen Abhebehub X flachgedrückt werden kann und sich in einem Federwiderlager eines Einsatzes 16 abstützt, der in einen Passsitz 22 des Gehäuses im Sperrseite-Kanal 4 zumindest eingepresst ist und über das obere Ende des Gehäuses 1 vorsteht. Der Einsatz 16 ist topfförmig und mit seinem Topfrand voran eingepresst. Er enthält in Umfangsrichtung verteilte Axialbohrungen 18 als Strömungswege, die (Fig. 2 und 3) Führungsstege 17 zur Zusammenarbeit mit dem Führungsabschnitt 9 begrenzen, und enthält eine Axialbohrung 20 zum Zusammenwirken mit dem Führungsschaft 11. Der Führungsabschnitt 9 wirkt mit den axialen Führungsstegen 17 mit einem leichten Gleitsitz zusammen, während zwischen dem Führungsschaft 11 und der Axialbohrung 20 in einem Ringteil 19 des Einsatzes 16 ein Radialspiel vorliegen kann. Die Topfwand 21 des Einsatzes 16 ist im Passsitz 22 zumindest verpresst und definiert zusammen mit einer Ansenkung 23 des oberen Gehäuseendes eine Aufnahmenut für einen dort eingeknüpften O-Ring 24. Die Ansenkung 23 formt am Gehäuseende eine Dichtschneidkante 44. Die Topfwand 21 kann einen randseitigen Sicherungsflansch 25 für den O-Ring 24 aufweisen.

In der Draufsicht (Blickrichtung in Fig. 1 von oben) der Fig. 2 sind die Axialbohrungen 18 im Einsatz 16 zu erkennen, wie auch die Axialbohrung 20 für den Führungsschaft 11 im Ringkörper 19 des Einsatzes 16. In der Radialschnittansicht der Fig. 3 (Schnittebene III - III in Fig. 1) ist die Ausbildung der Axialführungsstege 17 zwischen Bereichen der Axialbohrungen 18 zu erkennen. Die Axialführungsstege 17 fassen den Führungsabschnitt 9 des Schließgliedes 7 an mehreren Positionen entlang seines Umfangs.

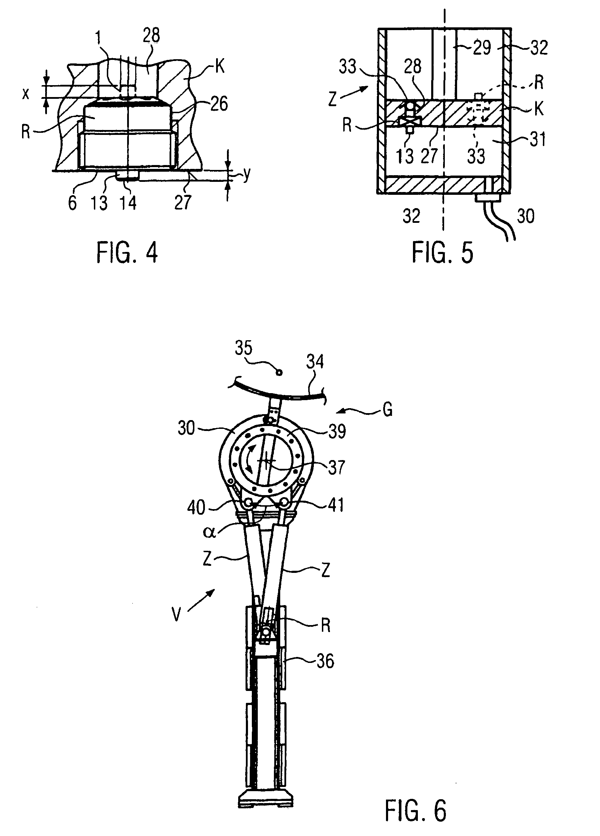

In Fig. 4 ist eine mögliche Einbausituation des Rückschlagventils R der Fig. 1 bis 3 in verkleinertem Maßstab dargestellt. Und zwar ist das Hydraulik-Rückschlagventil R in eine Aufnahmebohrung 26 in einen Durchgangskanal 28 eines Kolbens K eines nicht näher dargestellten Hydraulikzylinders verbaut, derart, dass das Gehäuseende 6 etwa bündig ist mit einer Unterseite 27 des Kolbens, und in der Sperrstellung des Rückschlagventils R der Vorsprung 13 mit seinem Ende 14 in etwa mit dem Überstand Y über die Unterseite 27 des Kolbens K vorsteht. Der Führungsschaft 11 ist gestrichelt und in der Entsperrstellung des Rückschlagventils R bei maximalem Abhebehub X angedeutet. Das Rückschlagventil R wird beispielsweise mechanisch entsperrt, wenn der Kolben K im Hydraulikzylinder an eine nicht gezeigte Anlagefläche heranfährt und der Vorsprung 13 nach innen gedrückt wird. Dann ist über den Durchgangskanal 28 eine druckausgleichende Verbindung zwischen beiden Seiten des Kolbens K offen. Fährt der Kolben K wieder nach oben, z.B. durch eine extern einwirkende Kraft, nimmt das Rückschlagventil R selbsttätig wieder seine Absperrstellung ein, in der eine Strömung von oben nach unten in Fig. 4 durch den Durchgangskanal 28 leckagefrei blockiert wird.

Fig. 5 verdeutlicht einen Hydraulikzylinder Z, dessen Kolben K zumindest mit dem im Durchgangskanal 28 verbauten mechanisch entsperrbaren Rückschlagventil R ausgestattet ist. Der Vorsprung 13 steht über die untere Fläche 27 des Kolbens K vor und ist auf eine Anschlagfläche 32 im Hydraulikzylinder Z derart ausgerichtet, dass das Rückschlagventil R mechanisch entsperrt wird, sobald der Kolben K in seine untere Endlage an oder bei der Anschlagfläche 32 fährt. Dann wird über den Durchgangskanal 28 ein Druckausgleich zwischen den vom Kolben K im Hydraulikzylinder Z getrennten Kammern 32, 31 hergestellt. Um den Kolben aus dieser Endlage trotz des Druckausgleichs auch durch Druckbeaufschlagung über einen Anschluss 30 wieder nach oben in die gezeigte Position oder noch weiter verfahren zu können, kann im Durchgangskanal 28 ein weiteres Rückschlagventil 33 verbaut sein, das eine zur Sperrrichtung des mechanisch entsperrbaren Rückschlagventils R entgegengesetzte Sperrrichtung hat.

Um auch in der anderen Endlage des Kolbens (ganz oben) einen Druckausgleich zwischen den Kammern 31, 32 herstellen zu können, kann (gestrichelt angedeutet) ein gegensinnig montiertes, mechanisch entsperrbares Rückschlagventil R in einem weiteren Durchgangskanal 28 verbaut sein, gegebenenfalls kombiniert wiederum mit einem zweiten normalen Rückschlagventil 33, oder sind in demselben Durchgangskanal 28 zwei baugleiche mechanisch entsperrbare Rückschlagventile R mit gegensinnigen Sperrrichtungen und jeweils von einer Kolbenseite vorstehendem Vorsprung 13 verbaut. Mit 29 ist in Fig. 5 eine Kolbenstange des Kolbens K angedeutet, die zur Verstellung einer Last aus dem Hydraulikzylinder Z herausgeführt ist.

Fig. 6 deutet schließlich eine Einbausituation für das über den Vorsprung 13 mechanisch entsperrbare Rückschlagventil R an, und zwar in einer Verstellvorrichtung V eines Solargenerators G. Der Solargenerator G ist beispielsweise eine sogenannte Solarrinne 34 mit einem im Brennpunktbereich angeordneten Absorber 35, der ein Wärmeträgermedium enthält. Die Solarrinne 34 muss durch die Verstellvorrichtung V dem Sonnenstand nachgeführt werden, z.B. von Osten nach Westen, bzw. im Gefahrenfall in eine nicht gezeigte Stauposition gebracht werden.

Die Solarrinne 34 ist an einem Träger 39 befestigt, der in einer stationären Schwenklagerung 38 eines Pylonen 36 um eine Verstellachse 37 verdrehbar ist. Zwei Hydraulikzylinder Z sind in dem Pylonen 36 stationär abgestützt, arbeiten parallel und sind mit einer gegenseitigen Versetzung α (Phasenversetzung) in in Verstellrichtung (Doppelpfeil) beabstandeten Anlenkstellen 40, 41 am Träger 39 angelenkt. Die paarweise arbeitenden Hydraulikzylinder Z sind erforderlich, um einen Verstellbereich von beispielsweise mehr als 180° für die Solarrinne 34 zu erzielen, wobei bei Verstellbewegungen beide Hydraulikzylinder die jeweilige Endlage ihres Kolbens phasenversetzt (α) erreichen oder durchfahren. Ist der Kolben eines Zylinders in oder bei der Endlage, dann hat er in der Anlenkstelle 40 bzw. 41 einen extrem ungünstigen Hebelarm in Bezug auf die Stellachse 37, während aber der andere Hydraulikzylinder Z einen besseren Wirkhebelarm hat und den in der Endlage befindlichen Hydraulikzylinder wieder aus der Endlage bringt und umgekehrt. Allerdings ist es wichtig, dass der Hydraulikzylinder, dessen Kolben sich in Endlage befindet, möglichst keine Kräfte ausübt, die über die Anlenkstelle 40 oder 41 die Schwenklagerung 38 unzweckmäßig belasten, oder den anderen aktiven Hydraulikzylinder Z behindern. Aus diesem Grund ist es zweckmäßig, den Kolben jeweils dann freizuschalten, wenn er in oder nahe seiner Endlage ist, oder während diese Endlage durchlaufen wird. Zu diesem Zweck kann jeder Kolben der Hydraulikzylinder Z, ähnlich wie in Fig. 5, mit wenigstens einem mechanisch entsperrbaren Rückschlagventil R der Fig. 1 bis 4 bestückt sein.

Bei einer nicht gezeigten Alternative mit dem in Fig. 1 kürzeren Vorsprung (Ende 14') kann das Rückschlagventil R auch auf andere Weise mechanisch entsperrt werden, beispielsweise durch einen mit dem Vorsprung 13 zusammenwirkenden, in den Strömungsseite-Kanal 5 eintauchenden Anschlag, beispielsweise einen Stößel eines Kolbens, oder auf andere Weise. In jedem Fall wird an dem Schließglied 7 zur mechanischen Entsperrung nicht direkt an der Dichtfläche 12 angegriffen, um das dann zum Kippen oder Tanzen neigende Schließglied 7 instabil vom Ventilsitz 3 abzuheben, sondern wird der Vorsprung 13 mit seiner großen Fläche am Ende 14, 14' benutzt, um beim Abheben die Führung durch die Axialführungen 20, 17 zu unterstützen.

## Patentansprüche

1. Hydraulik-Rückschlagventil (R), insbesondere Einschraub-Rückschlagventil, mit einem rohrartigen, zwischen einem Sperrseite-Kanal (4) und einem Strömungsseite-Kanal (5) einen innenliegenden Ventilsitz (3) aufweisenden Gehäuse (1), in welchem im Sperrseite-Kanal (4) dem Ventilsitz (3) ein federbelastetes Schließglied (7) zugeordnet ist, das eine Dichtfläche (12) zur Zusammenarbeit mit dem Ventilsitz (3), anschließend an die Dichtfläche (12) einen zylindrischen Führungsabschnitt (9) und dem Ventilsitz (3) abgewandt einen zum Führungsabschnitt (9) koaxialen Führungsschaft (11) aufweist, wobei im Gehäuse (1) im Sperrseite-Kanal (4) Strömungswege begrenzende Axialführungen (17, 20) vorgesehen sind, wobei am Schließglied (7) dem Führungsschaft (11) abgewandt und angrenzend an die Dichtfläche (12) einstückig ein zum Führungsschaft (11) koaxialer Vorsprung (13) vorgesehen ist, der zum mechanischen Entsperren des Rückschlagventils (R) auch in vom Ventilsitz (3) abgehobener Entsperrstellung des Schließgliedes (7) durch den Ventilsitz (3), den Strömungsseite-Kanal (5) und zumindest in Richtung zum dort angrenzenden Gehäuseende (6) vorsteht und im Ventilsitz (3) einen Ringraum (42) begrenzt, **dadurch gekennzeichnet, dass** die Dichtfläche (12) eine kugelige oder konische Ringfläche ist, dass der Durchmesser des Ventilsitzes (3) kleiner ist als der Durchmesser des Führungsabschnittes (8), dass die Axialführungen in einem topfartigen Einsatz (16) von Axialbohrungsteilen (18) begrenzte Axialstege (17) für den Führungsabschnitt (9) und eine Axialbohrung (20) für den Führungsschaft (11) sind, dass der Einsatz (16) mit seinem Topfrand voran in einen Passabschnitt (22) des Gehäuses (1) zumindest eingepresst ist, und dass die Topfwand (21) des Einsatzes (16) und eine eine Schneidkante (44) begrenzende Ansenkung (23) des Gehäuses (1) gemeinsam eine Aufnahmenut für einen O-Ring (24) bilden.

2. Hydraulik-Rückschlagventil nach Anspruch 1, **dadurch gekennzeichnet, dass** der Vorsprung (13) ein zylindrischer Zapfen, vorzugsweise mit größerer Länge und größerem Außendurchmesser als der Führungsschaft (11) ist.

3. Hydraulik-Rückschlagventil nach Anspruch 1, **dadurch gekennzeichnet, dass** das Rückschlagventil (R) in einem Durchgangskanal (28) eines Kolbens (K) eines Hydraulikzylinders (Z) derart verbaut ist, dass der Vorsprung (13) mit seinem Überstand (Y) auf eine im Hydraulikzylinder (Z) vorgesehene Anschlagfläche (32) für den Kolben (K) ausgerichtet und mit Anlage des Kolbens (K) an der Anlagefläche (32) zwecks mechanischer Entsperrung des Rückschlagventils (R) von der Anschlagfläche (32) betätigbar ist, **dass** der Hydraulikzylinder (Z) zusammen mit einem parallelen Hydraulikzylinder (Z) einer Verstellvorrichtung (V) eines Solargenerators (G) angehört, in der beide Hydraulikzylinder (Z) stationär abgestützt und bezüglich einer Verstellachse in Verstellrichtung zueinander versetzt an einem schwenkbar gelagerten Träger (39) des Solargenerators (G) derart angelenkt sind, dass die Kolben (K) der beiden Hydraulikzylinder (Z) bei Verstellbewegungen ihre jeweilige Endlage an oder nahe einer Anschlagfläche (32) des Hydraulikzylinders (Z) mit einer gegenseitigen Fasenversetzung (α) durchlaufen, und dass in jedem Kolben (K) zumindest ein mechanisch entsperrbares Rückschlagventil (R) verbaut ist, das in der Endlage mechanisch entsperrbar ist und beide Kolbenseiten (31, 32) druckausgleichend verbindet.

4. Hydraulik-Rückschlagventil nach Anspruch 3, **dadurch gekennzeichnet, dass** im Durchgangskanal (28) ein weiteres Rückschlagventil (33) oder ein weiteres mechanisch über den Vorsprung (13) entsperrbares Rückschlagventil (R) mit zur Sperrrichtung des mechanisch über den Vorsprung (13) entsperrbaren Rückschlagventils (R) entgegengesetzt der Sperrrichtung angeordnet ist.

## Claims

1. Hydraulic non-return valve (R), in particular screw-in non-return valve, comprising a tubelike housing (1) containing an interior valve seat (3) between a blocking side channel (4) and a flowing side channel (5), within which housing (1) a spring loaded closure member (7) is associated in the blocking side channel (4) to the valve seat (3), which closure member (7) comprises a sealing surface (12) for co-action with the valve seat (3), adjacent to the sealing surface (12) a cylindrical guiding portion (9), and remote from the valve seat (3) a guiding shaft (11) being coaxial with the cylindrical guiding portion (9), wherein in the housing (1) in the blocking side channel (4) axial guidances (17, 20) bounding flow paths are provided, wherein a projection (13) is provided at the closure member (7) remote from the guiding shaft (11) and adjacent to the sealing surface (12) for mechanically unlocking the non-return valve (R) also in an unlocked position of the closure member (7) in which the closure member (7) is lifted from the valve seat (3), which projection (13) is unitary with the closure member (7) and coaxial to the guiding shaft (11), and protrudes through the valve seat (3), through the flowing side channel (5) and at least in a direction to the adjacent housing end (6) and bounds an annular space (42) within the valve seat (3), **characterised in that** the sealing surface (12) is a spherical or conical ring surface, that the diameter of the valve seat (3) is smaller than the diameter of the guiding portion (9), that the axial guidances both are axial webs (17) provided in a top-shaped insert (16) for the guiding portion (9), the axial webs (17) being bounded by axial bore parts (18), and an axial bore (20) for the guiding shaft (11), that the insert (16) at least is pressed into a fitting section (22) of the housing (1) with its top edge ahead, and that the pot wall (21) of the insert (16) and a countersink (23) of the housing (1) bounding a cutting edge (44) commonly form a receiving groove for an O-ring (24).

2. Hydraulic non-return valve according to claim 1, **characterised in that** the projection (13) is a cylindrical pin, preferably a pin having a larger length and a larger outer diameter than the guiding shaft (11).

3. Hydraulic non-return valve according to claim 1, **characterised in that** the non-return valve (R) is mounted such in a through flow channel (28) of a piston (K) of a hydraulic cylinder (Z), that the protrusion (Y) of the projection (13) points towards an abutment surface (32) for the piston (K) in the hydraulic cylinder (Z), the projection (13) being actuable by the abutment surface (32) in order to mechanically unlock the non-return valve (R) when the piston (K) abuts the abutment surface (32), that both hydraulic cylinder (Z) and a parallel hydraulic cylinder (Z) belong to an adjustment assembly (V) of a solar generator (G), within which adjustment assembly (V) both hydraulic cylinders (Z) are supported stationarily and are linked to a carrier (39) of the solar generator (G) pivotably supported in relation to an adjustment axis, both hydraulic cylinders (Z) being linked to the carrier (39) offset in adjustment direction and in relation to either each other, such that the pistons (K) of both hydraulic cylinders (Z) during adjustment movements pass through their respective end positions at or close to the abutment surface (32) of the respective hydraulic cylinder with a mutual phase shift (a), and that at least one mechanically unlockable non-return valve (R) is mounted in each piston (K), which non-return valve (R) is mechanically unlocked in the piston end position and interconnects both piston sides (31, 32) in pressure equalising fashion.

4. Hydraulic non-return valve according to claim 3, **characterised in that** a further non-return valve (3) or even a further non-return valve (R) which is unlockable mechanically via the projection (13) and has a blocking direction opposite to the blocking direction of the non-return valve (R) which is unlockable via the projection (13) is arranged in the through flow channel (28).

## Revendications

1. Clapet anti-retour hydraulique (R), notamment clapet anti-retour à visser, comprenant un carter (1) de forme tubulaire, qui présente un siège de clapet (3) situé à l'intérieur entre un canal côté fermeture (4) et un canal côté écoulement (5), et dans lequel est associé au siège de clapet (3), dans le canal côté fermeture (4), un organe d'obturation (7) chargé par ressort, qui présente une surface d'étanchéité (12) destinée à coopérer avec le siège de clapet (3), un tronçon de guidage (9) cylindrique se raccordant à la surface d'étanchéité (12), et une tige de guidage (11) coaxiale au tronçon de guidage (9), à l'opposé du siège de clapet (3), clapet anti-retour
dans lequel des guidages axiaux (17, 20) délimitant des parcours d'écoulement, sont prévus dans le canal côté fermeture (4) du carter (1), et
dans lequel sur l'organe d'obturation (7), à l'opposé de la tige de guidage (11) et de manière adjacente à la surface d'étanchéité (12), est prévue, d'un seul tenant, une protubérance (13) coaxiale à la tige de guidage (11), qui pour le déverrouillage mécanique du clapet anti-retour (R), fait saillie, également dans la position de déverrouillage de l'organe d'obturation (7) soulevé du siège de clapet (3), à travers le siège de clapet (3), le canal côté écoulement (5) et au moins en direction de l'extrémité de carter (6) adjacente, et délimite un espace annulaire (42) dans le siège de clapet (3),
**caractérisé en ce que** la surface d'étanchéité (12) est une surface annulaire sphérique ou conique, **en ce que** le
diamètre du siège de clapet (3) est plus petit que le diamètre du tronçon de guidage (8), **en ce que** les guidages axiaux sont réalisés dans un insert (16) en forme de pot, sous la forme de nervures axiales (17) délimitées par des parties d'alésages axiaux (18), pour le tronçon de guidage (9), et sous la forme d'un alésage axial (20) pour la tige de guidage (11), **en ce que** l'insert (16) est monté à force, avec son bord de pot en avant, dans un tronçon ajusté (22) du carter (1), et **en ce que** la paroi de pot (21) de l'insert (16) et un lamage (23) du carter (1), délimitant une arête vive (44), forment en commun une rainure de réception pour un joint torique (24).

2. Clapet anti-retour hydraulique selon la revendication 1, **caractérisé en ce que** la protubérance (13) est un tourillon cylindrique, de préférence d'une longueur plus grande et d'un diamètre extérieur plus grand que ceux de la tige de guidage (11).

3. Clapet anti-retour hydraulique selon la revendication 1, **caractérisé en ce que** le clapet anti-retour (R) est implanté dans un canal de passage (28) d'un piston (K) d'un vérin hydraulique (Z) de manière à ce que la protubérance (13), avec sa partie en saillie (Y), soit dirigée vers une surface de butée (32) pour le piston (K), prévue dans le vérin hydraulique (Z), et puisse être actionnée par la surface de butée (32) en vue d'un déverrouillage mécanique du clapet anti-retour (R) lorsque le piston (K) vient en appui contre la surface de butée (32), **en ce que** le vérin hydraulique (Z) fait partie, en commun avec un vérin hydraulique (Z) en parallèle, d'un dispositif de réglage (V) d'un générateur solaire (G), dans lequel les deux vérins hydrauliques (Z) sont en appui stationnaire et articulés sur un support (39), monté pivotant, du générateur
solaire (G), en étant décalés mutuellement dans la direction de réglage par rapport à un axe de réglage, de manière telle que les pistons (K) des deux vérins hydrauliques (Z), lors de mouvements de réglage, passent par leur position extrême respective, au niveau ou à proximité d'une surface de butée (32) du vérin hydraulique (Z), avec un décalage de phase réciproque (α), et **en ce que** dans chaque piston (K) est implanté au moins un clapet-anti-retour (R) à déverrouillage mécanique, qui, dans la position extrême, peut être déverrouillé mécaniquement et fait communiquer les deux côtés (31, 32) du piston en assurant son équilibrage en pression.

4. Clapet anti-retour hydraulique selon la revendication 3, **caractérisé en ce que** dans le canal de passage (28) est agencé un autre clapet anti-retour (33) ou un autre clapet anti-retour (R) pouvant être déverrouillé mécaniquement par la protubérance (13), avec une direction de verrouillage opposée à la direction de verrouillage du clapet anti-retour (R) pouvant être déverrouillé mécaniquement par la protubérance (13).
